# EUROPÄISCHE PATENTSCHRIFT

(11) **EP 3 642 084 B1**
(45) Veröffentlichungstag und Bekanntmachung des Hinweises auf die Patenterteilung: **30.12.2020**
(21) Anmeldenummer: 18734786.9
(22) Anmeldetag: 22.06.2018
(51) Int. Cl.: B60R 22/00

(54) **SICHERHEITSGURTEINRICHTUNG FÜR EIN FAHRZEUG**
SAFETY BELT DEVICE FOR A VEHICLE
SYSTÈME DE CEINTURE DE SÉCURITÉ POUR VÉHICULE

(30) Priorität: 22.06.2017 DE 102017210465
(43) Veröffentlichungstag der Anmeldung: 29.04.2020
(73) Patentinhaber: Volkswagen Aktiengesellschaft, 38440 Wolfsburg (DE)
(72) Erfinder: MÖKER, Carsten, 38471 Rühen (DE)
(86) Internationale Anmeldenummer: PCT/EP2018/066741
(87) Internationale Veröffentlichungsnummer: WO 2018/234537

(56) Entgegenhaltungen:
- DE-A1- 3 237 680
- DE-U1- 20 209 284
- US-A1- 2004 212 188

## Beschreibung

Die Erfindung betrifft eine Sicherheitsgurteinrichtung für ein Fahrzeug nach dem Oberbegriff des Patentanspruches 1 oder des Patentanspruches 7.

Eine solche Sicherheitsgurteinrichtung kann beispielhaft einen Drei-Punkt-Sicherheitsgurt, bestehend aus einem Beckengurtanteil und einem Schultergurtanteil, sowie einen Gurtaufroller aufweisen, auf dessen Wickelrolle der Sicherheitsgurt aufwickelbar ist. Bei einem, am Fahrzeuginsassen angelegten Sicherheitsgurt wird die Wickeltrommel des Gurtaufrollers im Falle einer unfallbedingten Fahrzeugverzögerung mit Hilfe einer darin verbauten Blockiereinrichtung blockiert, um einen Gurtauszug zu verhindern. Dadurch wirkt eine Gurtkraft auf den Fahrzeuginsassen. Um die auf den Fahrzeuginsassen wirkende Gurtkraft zu begrenzen, kann eine Gurtkraftbegrenzungseinheit vorgesehen sein, mittels der die auf den Fahrzeuginsassen ausgeübte Gurtkraft auf ein vordefiniertes Kraftniveau begrenzt ist.

Eine gattungsgemäße Sicherheitsgurteinrichtung weist eine solche Gurtkraftbegrenzungseinheit und ein damit zusammenwirkendes Gurtschloss auf, durch das eine Drahtseil-Schlaufe geführt ist. Diese geht in Drahtseilsegmente über, die aus dem Gurtschloss herausgeführt sind und sich bis zu einer Seilumlenkung erstrecken. An der Seilumlenkung sind die Drahtseilsegmente um eine Umlenkachse in Richtung auf die Gurtkraftbegrenzungseinheit umgelenkt. Im Hinblick auf eine bauraumgünstige Anordnung ist das Gurtschloss um eine Gurtschloss-Achse gedreht, und zwar so, dass die durch das Gurtschloss geführte Drahtseil-Schlaufe mit ihrer Schlaufenöffnung in Axialrichtung zur Umlenkachse offen ausgerichtet ist. In der Seilumlenkung wird das der Gurtkraftbegrenzungseinheit zugewandte Drahtseilsegment an einer ersten Seilrolle umgelenkt, während das der Gurtkraftbegrenzungseinheit abgewandte Drahtseilsegment an einer zweiten Seilrolle umgelenkt wird, die in der Axialrichtung der Umlenkachse versetzt zur ersten Seilrolle angeordnet ist. Die beiden Seilrollen sind in der Axialrichtung zueinander koaxial ausgerichtet sowie mit identischem Außendurchmesser ausgelegt.

In einem Gurtkraftbegrenzungsfall wird das Gurtschloss mit einer nach oben wirkenden Gurtkraft beaufschlagt, während die Drahtseilsegmente entgegen gerichtete Zugkräfte auf das Gurtschloß ausüben. Die in den Drahtseilsegmenten wirkenden Zugkräfte üben in der oben angegebenen Konstellation ein Torsionsmoment auf das Gurtschloss aus, das entgegen der obigen Gurtschloss-Drehung um die Gurtschloss-Achse wirkt. Bei einer solchen torsionsbedingten Gurtschloss-Verdrehung besteht das Risiko, dass im Gurtkraftbegrenzungsfall, das heißt im Crashfall, der Verlauf des Beckengurtanteils beeinträchtigt wird.

Aus der DE 32 37 680 A1 ist eine Dreipunkt-Sicherheitsgurtanordnung bekannt, bei der ein erstes Ende des Sicherheitsgurtes zumindest in der Höhe frei verstellbar gehalten ist und das andere Ende des Sicherheitsgurtes nach Art einer Flaschenzugvorrichtung mit dem ersten Sicherheitsgurt-Ende verbunden ist.

Die Aufgabe der Erfindung besteht darin, eine Sicherheitsgurteinrichtung bereitzustellen, deren Funktionsfähigkeit im Gurtkraftbegrenzungsfall, das heißt zum Beispiel in einem Crashfall, in einfacher Weise erhöht ist.

Die Aufgabe ist durch die Merkmale des Patentanspruches 1 oder 7 gelöst. Bevorzugte Weiterbildungen der Erfindung sind in den Unteransprüchen offenbart.

Der Kern der Erfindung beruht auf der folgenden Erkenntnis: So erstrecken sich in der oben beschriebenen Sicherheitsgurteinrichtung die aus dem Gurtschloss herausgeführten Drahtseilsegmente über einen Drahtseilweg bis zur Seilumlenkung und spannen dabei einen Schlaufenwinkel auf. Der Schlaufenwinkel bestimmt die Ausrichtung der im Gurtkraftbegrenzungsfall in den Drahtseilsegmenten verlaufenden Kraftwirklinien. Durch Reduzierung des Schlaufenwinkels können die in den Drahtseilsegmenten wirkenden, das Torsionsmoment verursachenden Kraftkomponenten wirksam reduziert werden. Vor diesem Hintergrund sind im Anspruch 1 und im Anspruch 7 Maßnahmen beansprucht, um den oben definierten Schlaufenwinkel zu reduzieren und dadurch das im Gurtkraftbegrenzungsfall auf das Gurtschloss wirkende Torsionsmoment zu verringern. Gemäß dem kennzeichnenden Teil des Patentanspruches 1 ist zur Reduzierung des Torsionsmomentes die erste Umlenkkontur zur Umlenkung des, der Gurtkraftbegrenzungseinheit zugewandten Drahtseilsegmentes mit Bezug auf die zweite Umlenkkontur in Richtung auf die Gurtkraftbegrenzungseinheit um ein Versatzmaß versetzt. Auf diese Weise ist der Schlaufenwinkel zwischen den beiden, aus dem Gurtschloss herausgeführten Drahtseilsegmenten reduziert, was zu einer Reduzierung des Torsionsmomentes führt.

Erfindungsgemäß wird somit der Schlaufenwinkel durch die um das Versatzmaß versetzte Umlenkkontur-Anordnung reduziert, und zwar im Vergleich zu versatzfrei angeordneten Umlenkkonturen. Durch Reduzierung des Schlaufenwinkels sind zwangsläufig auch die in den Drahtseilsegmenten wirkenden, das Torsionsmoment verursachenden Kraftkomponenten reduzierbar.

In einer technischen Umsetzung können die erste und zweite Umlenkkontur jeweils als Seilrollen ausgebildet sein, die in Axialrichtung koaxial ausgerichtet sind. Je nach Auslegung der Sicherheitsgurteinrichtung können die beiden Seilrollen in Axialrichtung der Umlenkachse achsparallel angeordnet sein und/oder unterschiedliche Außendurchmesser aufweisen. Bevorzugt im Hinblick auf eine einfache Konstruktion ist es, wenn die beiden Seilrollen in der Axialrichtung koaxial zueinander ausgerichtet sind und zudem die erste Seilrolle zur Umlenkung des der Gurtkraftbegrenzungseinheit zugewandten Drahtseilsegmentes einen im Vergleich zur zweiten Seilrolle reduzierten Außendurchmesser aufweist, um die die Drahtseilsegmente geführte sind.

In gängiger Praxis ist das Gurtschloss mit der darin geführten Drahtseil-Schlaufe in etwa um 90° um die Gurtschloss-Achse gedreht, und zwar mit Bezug auf eine Gurtschlossposition, bei der die Schlaufenöffnung in etwa rechtwinklig zur Umlenkachse offen ausgerichtet ist und sich die Drahtseilsegmente verdrehungsfrei vom Gurtschloss zur Seilumlenkung erstrecken.

Die in der Sicherheitsgurteinrichtung verbaute Gurtkraftbegrenzungseinheit kann bevorzugt als eine bauraumgünstige Kolben-Zylinder-Anordnung realisiert sein, die aus einem Kolbenrohr und einem Kolben aufgebaut ist, der im Gurtkraftbegrenzungsfall unter Aufweitung sowie plastischer Verformung des Kolbenrohrs verlagerbar ist. Auf diese Weise wird im Gurtkraftbegrenzungsfall (das heißt im Crashfall) die auf den Fahrzeuginsassen ausgeübte Gurtkraft auf ein vordefiniertes Kraftniveau begrenzt.

Alternativ und/oder zusätzlich zu den obigen Erfindungsaspekten kann das im Gurtkraftbegrenzungsfall auf das Gurtschloss wirkende Torsionsmoment auch wie folgt reduziert werden: So kann die Sicherheitsgurteinrichtung entlang des Drahtseilwegs zwischen dem Gurtschloss und der Seilumlenkung eine lasttragende Seilführung aufweisen. Mittels der lasttragenden Seilführung kann das der Gurtkraftbegrenzungseinheit zugewandte Drahtseilsegment unter Reduzierung des Schlaufenwinkels in Richtung auf die Gurtkraftbegrenzungseinheit gedrückt werden. Alternativ und/oder zusätzlich kann die lasttragende Seilführung das der Gurtkraftbegrenzungseinheit abgewandte Drahtseilsegment weg von der Gurtkraftbegrenzungseinheit drücken, und zwar ebenfalls unter Reduzierung des Schlaufenwinkels.

Nachfolgend sind zwei Ausführungsbeispiele der Erfindung anhand der beigefügten Figuren beschrieben

Es zeigen:
- Figur 1: in einer perspektivischen Darstellung eine Sicherheitsgurteinrichtung mit angelegtem Sicherheitsgurt, jedoch unter Weglassung des Fahrzeuginsassen;
- Figur 2: eine Baueinheit, bestehend aus dem Gurtschloss der Sicherheitsgurteinrichtung und einer Kraftbegrenzungseinheit, in Alleinstellung;
- Figur 3: in einer perspektivischen Teilansicht eine nicht von der Erfindung umfasste Vergleichsform;
- Figur 4: in einer Ansicht entsprechend der Figur 1 ein erstes Ausführungsbeispiel der Erfindung;
- Figur 5: eine Anordnung der beiden Seilrollen in der Seilumlenkung; und

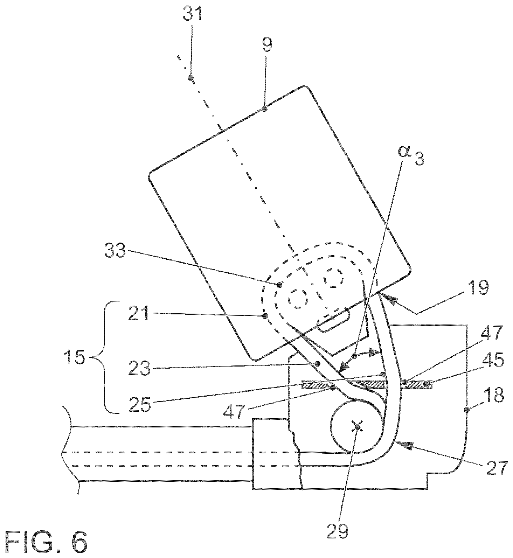

- Figur 6: in einer perspektivischen Teildarstellung ein zweites Ausführungsbeispiel der Erfindung.

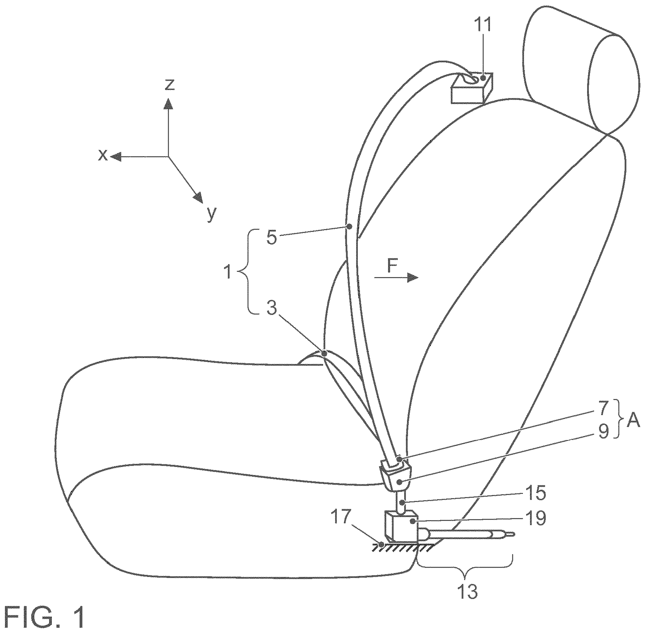

In der Figur 1 ist ein Fahrzeugsitz mit zugeordneter Sicherheitsgurteinrichtung gezeigt, deren Sicherheitsgurt 1 im angelegten Zustand, jedoch ohne Fahrzeuginsassen, dargestellt ist.

Demzufolge erstreckt sich in der Fahrzeugquerrichtung y ein Beckengurtanteil 3 des Sicherheitsgurtes 1 zwischen einem fahrzeuginneren Anbindungspunkt und einem fahrzeugäußeren Anbindungspunkt A. Der auf Beckenhöhe befindliche fahrzeuginnere Anbindungspunkt A ist lösbar ausgeführt, und zwar mit einer am Sicherheitsgurt 1 gehalterten Gurtzunge 7 und einem damit zusammenwirkenden, fahrzeugfesten Gurtschloss 9, in dem die Gurtzunge 7 eingesteckt ist. In etwa auf Schulterhöhe befindet sich ein dritter fahrzeugäußerer Anbindungspunkt. Dieser ist in gängiger Praxis durch einen nicht gezeigten, an einer nicht dargestellten Fahrzeugsäule montierten Umlenkbeschlag realisiert, um den der Schultergurtanteil 5 bis zu einem in der Fahrzeugsäule verbauten Gurtaufroller 11 geführt ist, in dem der Sicherheitsgurt 1 auf einer Wickeltrommel aufwickelbar ist. Der Gurtaufroller 11 weist in gängiger Praxis eine Blockiereinheit auf. Bei einem, am Fahrzeuginsassen angelegten Sicherheitsgurt 1 wird die Wickeltrommel des Gurtaufrollers 11 im Falle einer unfallbedingten Fahrzeugverzögerung mit Hilfe der Blockiereinheit blockiert, um einen Gurtauszug zu verhindern. Dadurch wirkt eine Gurtkraft F (Figur 1) vom Sicherheitsgurt 1 auf den Fahrzeuginsassen. Übersteigt die Gurtkraft F einen vorgegebenen Grenzwert, so wird eine Gurtkraftbegrenzungseinheit 13 aktiv, mittels der die auf den Fahrzeuginsassen ausgeübte Gurtkraft F auf ein vordefiniertes Kraftniveau begrenzbar ist.

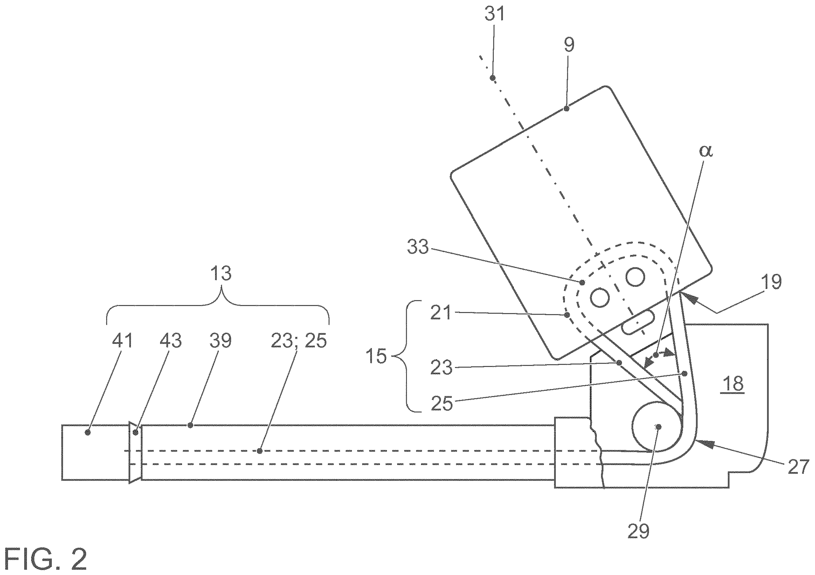

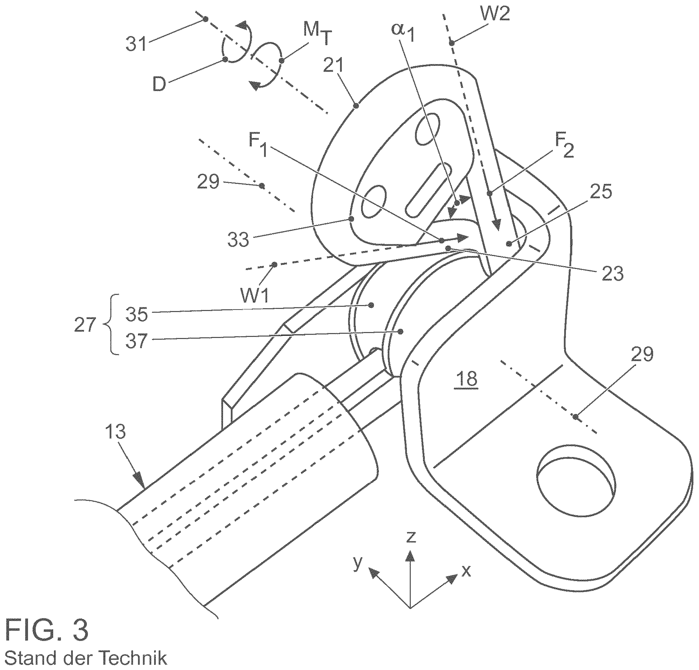

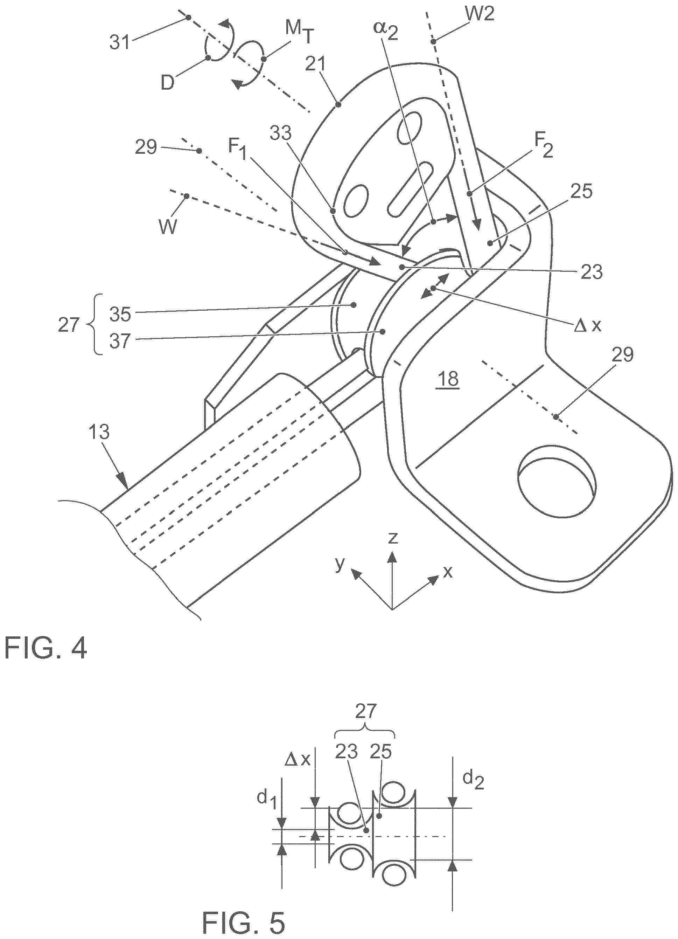

Wie aus der Figur 2 hervorgeht, ist das Gurtschloss 9 über ein Drahtseil 15 sowie über die Gurtkraftbegrenzungseinheit 13 an einem Umlenkbeschlag 18 befestigt, der am Fahrzeugaufbau 17 (in der Figur 1 grob angedeutet) montiert ist. Nachfolgend wird zum einfacheren Verständnis der Erfindung zunächst anhand der Figuren 2 und 3 der Aufbau sowie die Funktionsweise einer nicht von der Erfindung umfassten Vergleichsform beschrieben: Demzufolge ist durch eine Drahtseil-Durchführung 19 (Figur 2) des Gurtschlosses 9 eine Drahtseil-Schlaufe 21 geführt, die in Drahtseil-Segmente 23, 25 übergeht. Diese sind aus dem Gurtschloss 9 herausgeführt und erstrecken sich bis zu einer Seilumlenkung 27 des Umlenkbeschlages 18, an der sie um zumindest eine Umlenkachse 29 in Richtung auf die Gurtkraftbegrenzungseinheit 13 umgelenkt sind. In der Figur 2 oder 3 ist das Gurtschloss 9 um eine Gurtschloss-Achse 31 gedreht, und zwar so, dass die durch das Gurtschloss 9 geführte Drahtseil-Schlaufe 21 mit ihrer Schlaufenöffnung 33 in Axialrichtung zur Umlenkachse 29 offen ausgerichtet ist. In der Figur 3 (ebenso wie in der Figur 4) ist aus Gründen der Übersichtlichkeit das Gurtschloß 9 weggelassen.

Das in der Figur 2 oder 3 der Gurtkraftbegrenzungseinheit 13 zugewandte Drahtseilsegment 23 ist an einer ersten Seilrolle 35 der Seilumlenkung 27 umgelenkt, während das der Gurtkraftbegrenzungseinheit 13 abgewandte Drahtseilsegment 25 an einer zweiten Seilrolle 37 der Seilumlenkung 27 umgelenkt ist. Die beiden Seilrollen 35, 37 sind in der Figur 3 mit identischen Außendurchmessern ausgelegt sowie in der Axialrichtung der Umlenkachse 29 zueinander benachbart und koaxial angeordnet.

Die in der Figur 2 gezeigte Gurtkraftbegrenzungseinheit 13 ist als eine Kolben-Zylinder-Anordnung mit einem Kolbenrohr 39 und einem Kolben 41 aufgebaut, der im Gurtkraftbegrenzungsfall unter Aufweitung sowie plastischer Verformung des Kolbenrohrs innerhalb des selbigen verlagerbar ist. Die beiden Drahtseilsegmente 23, 25 sind in einer Doppelseilführung durch das Kolbenrohr 39 geführt und am Kolben 41 befestigt, zum Beispiel durch eine Verprägung oder Verkrimpung. In der in der Figur 2 gezeigten Nichtgebrauchslage ist der Kolben 41 mit seiner konusartigen Kolbenspitze 43 in Anlage mit einer vom Umlenkbeschlag 18 abgewandten Stirnseite des Kolbenrohrs 39.

Wie aus der Figur 2 hervorgeht, ist das Gurtschloss 9 mit der darin geführten Drahtseil-Schlaufe 21 um 90° um die Gurtschloss-Achse 31 gedreht, und zwar mit Bezug auf eine (nicht dargestellte) Gurtschlossposition, bei der die Schlaufenöffnung 33 in etwa rechtwinklig zur Umlenkachse 29 offen ausgerichtet ist und sich die Drahtseilsegmente 23, 25 verdrehungsfrei vom Gurtschloss 9 zur Seilumlenkung 27 erstrecken.

In der Figur 2 spannen die aus dem Gurtschloss 9 herausgeführten Drahtseilsegmente 23, 25 einen Schlaufenwinkel α auf. Der Schlaufenwinkel α bestimmt im Gurtkraftbegrenzungsfall (das heißt im Crashfall) die Ausrichtung der in den Drahtseilsegmenten 23, 25 verlaufenden Kraftwirklinien W1, W2 (Figur 3), entlang der die Zugkräfte F₁, F₂ verlaufen. Die beiden, in den Drahtseilsegmenten 23, 25 wirkenden Zugkräfte F₁, F₂, weisen Kraftkomponenten auf, die im Gurtkraftbegrenzungsfall ein Torsionsmoment M_{T} erzeugen, das entgegen der Gurtschloss-Drehung D um die Gurtschloss-Achse 31 wirkt.

Zur Reduzierung des Torsionsmomentes M_{T} sind in der Figur 4 unterschiedlich dimensionierte Seilrollen 35, 37 in der Seilumlenkung 27 verbaut. Die erste Seilrolle 35 zur Umlenkung des der Gurtkraftbegrenzungseinheit 13 zugewandtes Drahtseilsegmentes 23 weist einen im Vergleich zur zweiten Seilrolle 25 reduzierten Außendurchmesser d₁ auf, wie es auch in der Figur 5 gezeigt ist. Auf diese Weise ist die Umlenkung des der Gurtkraftbegrenzungseinheit 13 zugewandten Drahtseilsegmentes 23 - mit Bezug auf die Umlenkung des der Gurtkraftbegrenzungseinheit 13 abgewandten Drahtseilsegmentes 25 - in Richtung auf die Gurtkraftbegrenzungseinheit 13 um ein Versatzmaß Δx versetzt. Dieses Versatzmaß Δx führt zu einem im Vergleich zur Figur 3 reduzierten Schlaufenwinkel α₂. Dadurch reduzieren sich auch die in den Drahtseilsegmenten 23, 25 wirkenden, das Torsionsmoment M_{T} verursachenden Kraftkomponenten der beiden Zugkräfte F₁, F₂.

In der Figur 5 ist ein zweites Ausführungsbeispiel der Erfindung gezeigt, das im Wesentlichen baugleich mit der in der Figur 3 gezeigten, nicht von der Erfindung umfassten Vergleichsform ist. Im Unterschied zur Figur 3 ist in der Figur 5 zusätzlich eine lasttragende Seilführung 45 verbaut. Diese ist als eine Führungsplatte realisiert, die zwei, in der Fahrzeuglängsrichtung x voneinander versetzte Durchführungsöffnungen 47 aufweist, durch die jeweils ein Drahtseilsegment 23, 25 lose geführt ist. Die beiden Durchführungsöffnungen 47 sind so in der lasttragenden Seilführung 45 positioniert, dass das der Drahtseilbegrenzungseinheit 13 zugewandte Drahtseilsegment 23 in Richtung auf die Gurtkraftbegrenzungseinheit 13 gedrückt wird und gleichzeitig das der Gurtkraftbegrenzungseinheit 13 abgewandte Drahtseilsegment 25 weg von der Gurtkraftbegrenzungseinheit 13 gedrückt wird. Auf diese Weise erhöht sich der von den Drahtseilsegmenten 23, 25 aufgespannte Schlaufenwinkel α₃, wodurch im Gurtkraftbegrenzungsfall ein im Vergleich zur Figur 3 reduziertes Torsionsmoment M_{T} erzeugt wird.

### Bezugszeichenliste

- 1: Sicherheitsgurt
- 3: Beckengurtanteil
- 5: Schultergurtanteil
- 7: Gurtzunge
- 9: Gurtschloss
- 11: Gurtaufroller
- 13: Gurtkraftbegrenzungseinheit
- 15: Drahtseil
- 17: Fahrzeugaufbau
- 18: Umlenkbeschlag
- 19: Durchführung
- 21: Drahtseil-Schlaufe
- 23, 25: Drahtseil-Segmente
- 27: Seilumlenkung
- 29: Umlenkachse
- 31: Gurtschloss-Achse
- 33: Schlaufenöffnung
- 35: erste Seilrolle
- 37: zweite Seilrolle
- 39: Kolbenrohr
- 41: Kolben
- 43: Kolbenspitze
- 45: lasttragende Seilführung
- 47: Durchführungsöffnung
- M_{T}: Torsionsmoment
- F₁, F₂: Zugkräfte
- F: Gurtkraft
- A: Anbindungspunkt
- d₁, d₂: Außendurchmesser
- W1, W2: Kraftwirklinien

## Patentansprüche

1. Sicherheitsgurteinrichtung für ein Fahrzeug, mit einer Gurtkraftbegrenzungseinheit (13) und einem damit zusammenwirkenden Gurtschloss (9), durch das eine Drahtseil-Schlaufe (21) geführt ist, die in Drahtseil-Segmente (23, 25) übergeht, die aus dem Gurtschloss (9) herausgeführt sind und sich bis zu einer Seilumlenkung (27) erstrecken, an der sie um zumindest eine Umlenkachse (29) in Richtung auf die Gurtkraftbegrenzungseinheit (13) umgelenkt sind, wobei das Gurtschloss (9) um eine Gurtschloss-Achse (31) gedreht ist, so dass die durch das Gurtschloss (9) geführte Drahtseil-Schlaufe (21) mit ihrer Schlaufenöffnung (33) in Axialrichtung zur Umlenkachse (29) offen ausgerichtet ist, wobei das der Gurtkraftbegrenzungseinheit (13) zugewandte Drahtseilsegment (23) an einer ersten Umlenkkontur (35) der Seilumlenkung (27) umgelenkt ist und das der Gurtkraftbegrenzungseinheit (13) abgewandte Drahtseilsegment (25) an einer zweiten Umlenkkontur (37) der Seilumlenkung (27) umgelenkt ist, wobei die erste und zweite Umlenkkonturen (35, 37) in Axialrichtung der Umlenkachse (29) zueinander versetzt sind, und wobei in einem Gurtkraftbegrenzungsfall die Drahtseilsegmente (23, 25) ein Torsionsmoment (M_{T}) auf das Gurtschloss (9) ausüben, das entgegen der Gurtschloss-Drehung (D) um die Gurtschloss-Achse (31) wirkt, **dadurch gekennzeichnet, dass** zur Reduzierung des Torsionsmoments (M_{T}) die erste Umlenkkontur (35) zur Umlenkung des der Gurtkraftbegrenzereinheit (13) zugewandten Drahtseilsegments (23) mit Bezug auf die zweite Umlenkkontur (37) in Richtung auf die Gurtkraftbegrenzungseinheit (13) um ein Versatzmaß (Δx) versetzt ist.

2. Sicherheitsgurteinrichtung nach Anspruch 1, **dadurch gekennzeichnet, dass** die aus dem Gurtschloss (9) herausgeführten Drahtseilsegmente (23, 25) über einen freien Drahtseilweg zur Seilumlenkung (27) erstrecken und einen Schlaufenwinkel (α_{2;} α₃) aufspannen, der die Ausrichtung der im Gurtkraftbegrenzungsfall in den Drahtseilsegmenten (23, 25) verlaufenden Kraftwirklinien bestimmt, und dass insbesondere der Schlaufenwinkel (α₂) durch die um das Versatzmaß (Δx) versetzten Umlenkkonturen (35, 37) reduziert ist, und zwar im Vergleich zu versatzfrei angeordneten Umlenkkonturen (35, 37), und dass insbesondere durch Reduzierung des Schlaufenwinkels (α_{2;} α₃) die in den Drahtseilsegmenten (23, 25) wirkenden, das Torsionsmoment (M_{T}) verursachenden Kraftkomponenten reduzierbar sind.

3. Sicherheitsgurteinrichtung nach Anspruch 1 oder 2, **dadurch gekennzeichnet, dass** die erste und zweite Umlenkkontur (35, 37) jeweils als Seilrollen ausgebildet sind, die in Axialrichtung koaxial ausgerichtet sind.

4. Sicherheitsgurteinrichtung nach Anspruch 3, **dadurch gekennzeichnet, dass** die beiden Seilrollen (35, 37) in Axialrichtung koaxial zueinander ausgerichtet sind, und dass die erste Seilrolle (35) zur Umlenkung des der Gurtkraftbegrenzungseinheit (13) zugewandten Drahtseilsegments (23) einen im Vergleich zur zweiten Seilrolle (37) reduzierten Außendurchmesser (d₁) aufweist.

5. Sicherheitsgurteinrichtung nach einem der vorhergehenden Ansprüche, **dadurch gekennzeichnet, dass** das Gurtschloss (9) mit der darin geführten Drahtseil-Schlaufe (21) um 90° um die Gurtschloss-Achse (31) gedreht ist, und zwar mit Bezug auf eine Gurtschlossposition, bei der die Schlaufenöffnung (33) in etwa rechtwinklig zur Umlenkachse (29) offen ausgerichtet ist und sich die Drahtseilsegmente (23, 25) verdrehungsfrei vom Gurtschloss (9) zur Seilumlenkung (27) erstrecken.

6. Sicherheitsgurteinrichtung nach einem der vorhergehenden Ansprüche, **dadurch gekennzeichnet, dass** die Gurtkraftbegrenzungseinheit (13) als eine Kolben-Zylinder-Anordnung mit einem Kolbenrohr (39) und einem Kolben (41) aufgebaut ist, der im Gurtkraftbegrenzungsfall unter Aufweitung sowie plastischer Verformung des Kolbenrohrs (39) verlagerbar ist, wodurch die auf einen Fahrzeuginsassen ausgebübte Gurtkraft (F) auf ein vordefiniertes Kraftniveau begrenzt ist.

7. Sicherheitsgurteinrichtung für ein Fahrzeug, mit einer Gurtkraftbegrenzungseinheit (13) und einem damit zusammenwirkenden Gurtschloss (9), durch das eine Drahtseil-Schlaufe (21) geführt ist, die in Drahtseil-Segmente (23, 25) übergeht, die aus dem Gurtschloss (9) herausgeführt sind und sich bis zu einer Seilumlenkung (27) erstrecken, an der sie um zumindest eine Umlenkachse (29) in Richtung auf die Gurtkraftbegrenzungseinheit (13) umgelenkt sind, wobei das Gurtschloss (9) um eine Gurtschloss-Achse (31) gedreht ist, so dass die durch das Gurtschloss (9) geführte Drahtseil-Schlaufe (21) mit ihrer Schlaufenöffnung (33) in Axialrichtung zur Umlenkachse (29) offen ausgerichtet ist, wobei das der Gurtkraftbegrenzungseinheit (13) zugewandte Drahtseilsegment (23) an einer ersten Umlenkkontur (35) der Seilumlenkung (27) umgelenkt ist und das der Gurtkraftbegrenzungseinheit (13) abgewandte Drahtseilsegment (25) an einer zweiten Umlenkkontur (37) der Seilumlenkung (27) umgelenkt ist, wobei die erste und zweite Umlenkkonturen (35, 37) in Axialrichtung der Umlenkachse (29) zueinander versetzt sind, und wobei in einem Gurtkraftbegrenzungsfall die Drahtseilsegmente (23, 25) ein Torsionsmoment (M_{T}) auf das Gurtschloss (9) ausüben, das entgegen der Gurtschloss-Drehung (D) um die Gurtschloss-Achse (31) wirkt, wobei sich die aus dem Gurtschloss (9) herausgeführten Drahtseilsegmente (23, 25) über einen Drahtseilweg zur Seilumlenkung (27) erstrecken und einen Schlaufenwinkel (α₃) aufspannen, der die Ausrichtung der im Gurtkraftbegrenzungsfall in den Drahtseilsegmenten (23, 25) verlaufenden Kraftwirklinien bestimmt, **dadurch gekennzeichnet, dass** die Seilumlenkung (27) eine lasttragende Seilführung (45) aufweist, mittels der unter Reduzierung des Schlaufenwinkels (α₃) das der Gurtkraftbegrenzungseinheit (13) zugewandte Drahtseilsegment (23) in Richtung der Gurtkraftbegrenzungseinheit (13) drückt und/oder das der Gurtkraftbegrenzungseinheit (13) abgewandte Drahtseilsegment (25) weg von der Gurtkraftbegrenzungseinheit (13) drückt, und dass durch Reduzierung des Schlaufenwinkels (α₃) die in den Drahtseilsegmenten (23, 25) wirkenden, das Torsionsmoment (M_{T}) verursachenden Kraftkomponenten reduzierbar sind.

## Claims

1. Safety belt device for a vehicle, comprising a belt force limiting unit (13) and a buckle (9) which cooperate therewith and through which a wire cable loop (21) is guided that transitions into wire cable segments (23, 25) that are guided out of the buckle (9) and extend to a cable deflection (27), at which they are deflected around at least one deflection axis (29) in the direction toward the belt force limiting unit (13), wherein the buckle (9) is rotated about a buckle axis (31) so that the wire cable loop (21) guided through the buckle (9) is oriented with its loop opening (33) open in the axial direction with respect to the deflection axis (29), wherein the wire cable segment (23) facing the belt force limiting unit (13) is deflected at a first deflection contour (35) of the cable deflection (27) and the wire cable segment (25) facing away from the belt force limiting unit (13) is deflected at a second deflection contour (37) of the cable deflection (27), wherein the first and second deflection contours (35, 37) are offset from one another in the axial direction of the deflection axis (29), and wherein in the event of a belt force limitation, the wire cable segments (23, 25) exert a torsional moment (M_{T}) on the buckle (9) that acts counter to the buckle rotation (D) about the buckle axis (31), **characterized in that** in order to reduce the torsional moment (M_{T}), the first deflection contour (35) for deflecting the wire cable segment (23) facing the belt force limiting unit (13) is offset with respect to the second deflection contour (37) in the direction toward the belt force limiting unit (13) by an offset dimension (Δx).

2. Safety belt device according to Claim 1, **characterized in that** the wire cable segments (23, 25) guided out of the buckle (9) extend over an open wire cable path to the cable deflection (27) and span a loop angle (α_{2;} α₃) which determines the orientation of the force action lines running in the wire cable segments (23, 25) in the event of a belt force limitation, and **in that**, especially, the loop angle (α₂) is reduced by the deflection contours (35, 37) offset by the offset dimension (Δx), and indeed in comparison to deflection contours (35, 37) arranged without any offset, and **in that**, especially, the force components acting in the wire cable segments (23, 25) and causing the torsional moment (M_{T}) are reducible by reducing the loop angle (α_{2;} α₃).

3. Safety belt device according to Claim 1 or 2, **characterized in that** the first and second deflection contours (35, 37) are each designed as cable pulleys which are oriented coaxially in the axial direction.

4. Safety belt device according to Claim 3, **characterized in that** the two cable pulleys (35, 37) are oriented coaxially to one another in the axial direction, and **in that** the first cable pulley (35) for deflecting the wire cable segment (23) facing the belt force limiting unit (13) has a reduced outer diameter (d₁) in comparison to the second cable pulley (37).

5. Safety belt device according to any of the preceding claims, **characterized in that** the buckle (9) having the wire cable loop (21) guided therein is rotated 90° about the buckle axis (31) and specifically with respect to a buckle position, at which the loop opening (33) is oriented so as to be open approximately at a right angle to the deflection axis (29) and the wire cable segments (23, 25) extend from the buckle (9) to the cable deflection (27) without twisting.

6. Safety belt device according to any of the preceding claims, **characterized in that** the belt force limiting unit (13) is constructed as a piston cylinder arrangement having a piston tube (39) and a piston (41), which, in the event of a belt force limitation, can be displaced with expansion and plastic deformation of the piston tube (39), whereby the belt force (F) exerted on a vehicle occupant is limited to a predefined force level.

7. Safety belt device for a vehicle, comprising a belt force limiting unit (13) and a buckle (9) which cooperates therewith and through which a wire cable loop (21) is guided that transitions into wire cable segments (23, 25) that are guided out of the buckle (9) and extend to a cable deflection (27), at which they are deflected around at least one deflection axis (29) in the direction toward the belt force limiting unit (13), wherein the buckle (9) is rotated about a buckle axis (31) so that the wire cable loop (21) guided through the buckle (9) is oriented with its loop opening (33) open in the axial direction with respect to the deflection axis (29), wherein the wire cable segment (23) facing the belt force limiting unit (13) is deflected at a first deflection contour (35) of the cable deflection (27) and the wire cable segment (25) facing away from the belt force limiting unit (13) is deflected at a second deflection contour (37) of the cable deflection (27), wherein the first and second deflection contours (35, 37) are offset from one another in the axial direction of the deflection axis (29), and wherein in the event of a belt force limitation, the wire cable segments (23, 25) exert a torsional moment (M_{T}) on the buckle (9) that acts counter to the buckle rotation (D) about the buckle axis (31), wherein the wire cable segments (23, 25) guided out of the buckle (9) extend over a wire cable path to the cable deflection (27) and span a loop angle (α₃) which determines the orientation of the force action lines running in the wire cable segments (23, 25) in the event of a belt force limitation, **characterized in that** the cable deflection (27) has a load-carrying cable guide (45) by means of which the wire cable segment (23) facing the belt force limiting unit (13) presses in the direction of the belt force limiting unit (13) and/or the wire cable segment (25) facing away from the belt force limiting unit (13) presses away from the belt force limiting unit (13) when the loop angle (α₃) is reduced, and **in that** force components acting in the wire cable segments (23, 25) and causing the torsional moment (M_{T}) are reducible by reducing the loop angle (α₃).

## Revendications

1. Dispositif de ceinture de sécurité pour un véhicule, comprenant une unité de limitation de la force de ceinture (13) et une boucle de ceinture (9) interagissant avec celle-ci, à travers laquelle un passant à câble métallique (21) est guidé, qui se transforme en segments de câble métallique (23, 25), lesquels sont guidés hors de la boucle de ceinture (9) et s'étendent jusqu'à une déviation de câble (27), au niveau de laquelle ils sont déviés autour d'au moins un axe de déviation (29) dans la direction de l'unité de limitation de la force de ceinture (13), dans lequel la boucle de ceinture (9) tourne autour d'un axe de boucle de ceinture (31) de telle sorte que le passant à câble métallique (21) guidé à travers la boucle de ceinture (9) soit orienté avec son ouverture de passant (33) ouverte dans la direction axiale par rapport à l'axe de déviation (29), dans lequel le segment de câble métallique (23) tourné vers l'unité de limitation de la force de ceinture (13) est dévié au niveau d'un premier contour de déviation (35) de la déviation de câble (27) et le segment de câble métallique (25) tourné à l'opposé à l'unité de limitation de la force de ceinture (13) est dévié au niveau d'un second contour de déviation (37) de la déviation de câble (27), dans lequel les premier et second contours de déviation (35, 37) sont décalés l'un de l'autre dans la direction axiale de l'axe de déviation (29) et dans lequel en cas de limitation de la force de ceinture, les segments de câble métallique (23, 25) exercent un moment de torsion (M_{T}) sur la boucle de ceinture (9), lequel s'oppose à la rotation de la boucle de ceinture (D) autour de l'axe de boucle de ceinture (31), **caractérisé en ce que,** pour réduire le moment de torsion (M_{T}), le premier contour de déviation (35), pour dévier le segment de câble métallique (23) tourné vers l'unité de limitation de la force de ceinture (13) est décalé par rapport au second contour de déviation (37) dans la direction de l'unité de limitation de la force de ceinture (13) d'une distance de décalage (Δx).

2. Dispositif de ceinture de sécurité selon la revendication 1, **caractérisé en ce que** les segments de câble métallique (23, 25) guidés hors de la boucle de ceinture (9) s'étendent sur un chemin de câble métallique libre jusqu'à la déviation de câble (27) et délimitent un angle de passant (α₂ ; α₃), lequel détermine l'orientation des lignes de force agissant dans les segments de câble métallique (23, 25) en cas de limitation de la force de ceinture et que, en particulier l'angle de passant (α₂) est réduit par les contours de déviation (35, 37) décalés de la distance de décalage (Δx), c'est-à-dire par rapport aux contours de déviation (35, 37) disposés sans décalage et que, en particulier par réduction de l'angle de passant (α₂; α₃), des composantes de force agissant dans les segments de câble métallique (23, 25) et provoquant le moment de torsion (M_{T}) peuvent être réduites.

3. Dispositif de ceinture de sécurité selon la revendication 1 ou 2, **caractérisé en ce que** les premier et second contours de déviation (35, 37) sont respectivement conçus sous la forme de poulies à câble, lesquelles sont alignées coaxialement dans la direction axiale.

4. Dispositif de ceinture de sécurité selon la revendication 3, **caractérisé en ce que** les deux poulies à câble (35, 37) sont alignées coaxialement l'une par rapport à l'autre dans la direction axiale et que la première poulie à câble (35), pour dévier le segment de câble métallique (23) tourné vers l'unité de limitation de la force de ceinture (13), présente un diamètre extérieur (d₁) réduit par rapport à la seconde poulie à câble (37).

5. Dispositif de ceinture de sécurité selon l'une quelconque des revendications précédentes, **caractérisé en ce que** la boucle de ceinture (9), avec le passant à câble métallique (21) guidé à l'intérieur de celle-ci, est tournée de 90 ° autour de l'axe de boucle de ceinture (31), c'est-à-dire par rapport à une position de boucle de ceinture dans laquelle l'ouverture de passant (33) est orientée ouverte approximativement perpendiculairement par rapport à l'axe de déviation (29) et les segments de câble métallique (23, 25) s'étendent sans torsion de la boucle de ceinture (9) vers la déviation de câble (27).

6. Dispositif de ceinture de sécurité selon l'une quelconque des revendications précédentes, **caractérisé en ce que** l'unité de limitation de la force de ceinture (13) est conçue sous la forme d'un agencement piston-cylindre comportant un tube de piston (39) et un piston (41), lequel, en cas de limitation de la force de ceinture, peut être déplacé par expansion ainsi que par déformation plastique du tube de piston (39), la force de ceinture (F) exercée par un occupant du véhicule étant limitée à un niveau de force prédéfini.

7. Dispositif de ceinture de sécurité pour un véhicule, comprenant une unité de limitation de la force de ceinture (13) et une boucle de ceinture (9) interagissant avec celle-ci, à travers laquelle un passant à câble métallique (21) est guidé, qui se transforme en segments de câble métallique (23, 25), lesquels sont guidés hors de la boucle de ceinture (9) et s'étendent jusqu'à une déviation de câble (27), au niveau de laquelle ils sont déviés autour d'au moins un axe de déviation (29) dans la direction de l'unité de limitation de la force de ceinture (13), dans lequel la boucle de ceinture (9) tourne autour d'un axe de boucle de ceinture (31) de telle sorte que le passant à câble métallique (21) guidé à travers la boucle de ceinture (9) soit orienté avec son ouverture de passant (33) ouverte dans la direction axiale par rapport à l'axe de déviation (29), dans lequel le segment de câble métallique (23) tourné vers l'unité de limitation de la force de ceinture (13) est dévié au niveau d'un premier contour de déviation (35) de la déviation de câble (27) et le segment de câble métallique (25) tourné à l'opposé à l'unité de limitation de la force de ceinture (13) est dévié au niveau d'un second contour de déviation (37) de la déviation de câble (27), dans lequel les premier et second contours de déviation (35, 37) sont décalés l'un de l'autre dans la direction axiale de l'axe de déviation (29) et dans lequel en cas de limitation de la force de ceinture, les segments de câble métallique (23, 25) exercent un moment de torsion (M_{T}) sur la boucle de ceinture (9), lequel s'oppose à la rotation de la boucle de ceinture (D) autour de l'axe de boucle de ceinture (31), dans lequel les segments de câble métallique (23, 25) guidés hors de la boucle de ceinture (9) s'étendent sur un chemin de câble métallique jusqu'à la déviation de câble (27) et délimitent un angle de boucle (α₃), lequel détermine l'orientation des lignes de force agissant dans les segments de câble métallique (23, 25) en cas de limitation de la force de ceinture, **caractérisé en ce que** la déviation de câble (27) comporte un guidage de câble (45) porteur de charge, au moyen duquel, par réduction de l'angle de passant (α₃), le segment de câble métallique (23) tourné vers l'unité de limitation de la force de ceinture (13) appuie dans la direction de l'unité de limitation de la force de ceinture (13) et/ou le segment de câble métallique (25) tourné à l'opposé à l'unité de limitation de la force de ceinture (13) appuie pour s'éloigner de l'unité de limitation de la force de ceinture (13) et que, par réduction de l'angle de passant (α₃), les composantes de force agissant dans les segments de câble métallique (23, 25) et provoquant le moment de torsion (M_{T}) peuvent être réduites.
